# EUROPÄISCHE PATENTSCHRIFT

(11) **EP 1 948 956 B1**
(45) Veröffentlichungstag und Bekanntmachung des Hinweises auf die Patenterteilung: **12.09.2012**
(21) Anmeldenummer: 06807565.4
(22) Anmeldetag: 26.10.2006
(51) Int. Cl.: F16F 1/02, F16F 1/32, H02K 33/02, F04B 35/04

(54) **FÜHRUNGSELEMENT**
GUIDE ELEMENT
ELEMENT DE GUIDAGE

(30) Priorität: 09.11.2005 DE 102005053837
(43) Veröffentlichungstag der Anmeldung: 30.07.2008
(73) Patentinhaber: BSH Bosch und Siemens Hausgeräte GmbH, 81739 München (DE)
(72) Erfinder: BECHTOLD, Mario, 91334 Hemhofen (DE); GROMOLL, Bernd, 91083 Baiersdorf (DE); NUNNINGER, Stefan, 91058 Erlangen (DE)
(86) Internationale Anmeldenummer: PCT/EP2006/067796
(87) Internationale Veröffentlichungsnummer: WO 2007/054438

(56) Entgegenhaltungen:
- WO-A2-2005/022606
- US-A- 2 890 760
- US-A- 3 075 100
- US-A- 3 425 282
- US-A- 3 572 906

## Beschreibung

Die Erfindung bezieht sich auf ein Führungselement für Linearantriebe, Linearkompressoren oder dgl. gemäß dem Oberbegriff des Patentanspruches 1.

Der Schlitten insbesondere eines Linearmotors muss zum korrekten Betrieb auf einer vordefinierten Bahn gehalten werden. Je nach Hub der Bewegung können hierfür unterschiedliche Maßnahmen - wie Federn, Gleitführungen, oder dergleichen - verwendet werden. Wichtig ist, dass die Führung den Hub des Schlittens über die Lebensdauer des Motors ausführen kann, d.h. eine dauerfeste Auslegung der Führung. Weiter muss die Führung die bei der Bewegung entstehenden Querkräfte aufnehmen können und die Nutzbewegung möglichst wenig hemmen.

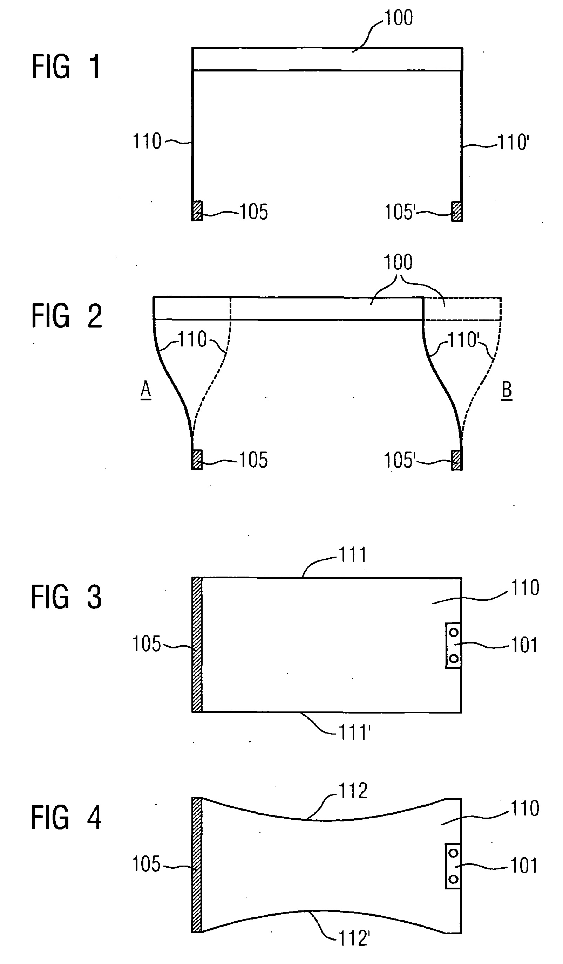

Beim Stand der Technik werden derartige Führungen durch zweidimensionale Blattfedern realisiert, was anhand Figur 1 verdeutlicht ist und weiter unten im Einzelnen beschrieben wird. Damit diese Blattfedern dauerfest werden, darf die Spannung in jeder Blattfeder einen vom Material abhängigen Wert nicht überschreiten. Daraus ergibt sich für eine geforderte Federsteifigkeit eine vom Material abhängige Federdicke und daraus wiederum berechnet sich aus den maximal zulässigen Spannungswerten die Abmessung der Feder. Eine so definierte Feder hat bei einem Hub von +/-10 mm eine minimale Länge von ca. 10 cm. Damit bestimmt die Feder maßgeblich die Gesamtabmessung des Systemaufbaus.

Die Patentschrift US 5,139,242 zeigt ein Aufhängungssystem für eine Linearantriebsvorrichtung mit einem Kolben, welcher an einem Befestigungselement befestigt ist. Das Befestigungselement ist mittels mehrerer Streifen an einem Ring befestigt.

Die Patentschrift US 5,779,455 zeigt einen Verdichter umfassend einen Kolben, welcher mittels Führungen geführt wird. Die Führungen weisen rechtwinklig zueinander angeordnete Federn auf.

Die Offenlegungsschrift WO 2004/007959 A1 zeigt ein Gehäuse umfassend einen Kolben, welcher in einem Zylinder geführt wird. Ferner sind Spiralfedern zur Führung des Kolbens vorgesehen.

Davon ausgehend ist es Aufgabe der Erfindung, ein verbessertes Führungselement zu schaffen.

Die Aufgabe ist erfindungsgemäß durch die Merkmale des Patentanspruches 1 gelöst. Weiterbildungen sind in den Unteransprüchen angegeben.

Gegenstand der Erfindung ist ein dreidimensionales Führungselement mit Strukturen, bei denen in drei Raumachsen voneinander unabhängig wählbare Parameter, wie insbesondere die Steifigkeit, möglich sind.

Mit der Erfindung kann eine Anordnung geschaffen, bei der die Federn kleiner gebaut werden kann. Insbesondere die Dauerfestigkeit der Federn hängt nunmehr vorteilhafterweise nicht mehr unmittelbar von deren Abmessungen ab. Die Steifigkeit der Federn wird vorzugsweise in X- und Y-Richtung relativ frei gewählt, wobei die Steifigkeit in Z Richtung minimal ist.

Weitere Einzelheiten und Vorteile der Erfindung.ergeben sich aus der nachfolgenden Figurenbeschreibung von Ausführungsbeispielen anhand der Zeichnung in Verbindung mit den Patentansprüchen.

Es zeigen
- Figur 1: eine Anordnung eines Linearantriebes mit einer zweidimensionalen Blattfeder,
- Figur 2: die Anordnung gemäß Figur 1 im ausgelenkten Zustand,
- Figur 3: die Draufsicht auf zwei alternative Blattfedern zur Verwendung bei Figur 1,
- Figuren 4 bis 7: drei unterschiedliche Anordnungen einer dreidimensional wirkenden Feder.

Die Figuren 1 bis 4 zeigen Blattfedern entsprechend dem Stand der Technik. In den Figuren 1 bis 4 ist ein linear verschiebbarer Schlitten jeweils mit 100 bezeichnet. Der Schlitten 100 wird von zwei Blattfedern 110 und 110' geführt, die an ihrem freien Ende ortsfest in Lagern 105 und 105' eingespannt und am Schlitten mit Elemente 101 befestigt sind .

Gemäß Figur 2 ergeben sich bei einer solchen Anordnung zwei Endpositionen A und B des Schlittens 100, die von der Feder steifigkeit abhängen.

In der Draufsicht der Figuren 3 und 4 sind zwei Varianten der Blattfedern ersichtlich. In der Version gemäß Figur 3 ist die Blattfeder 110 rechteckflächig mit geraden Randkonturen 111 bzw. 111' ausgebildet, während in der Version gemäß Figur 4 die Blattfeder 110 konkave Randkonturen 112, 112' hat. Damit kann die Belastung über die Länge der Feder nahezu konstant gehalten werden.

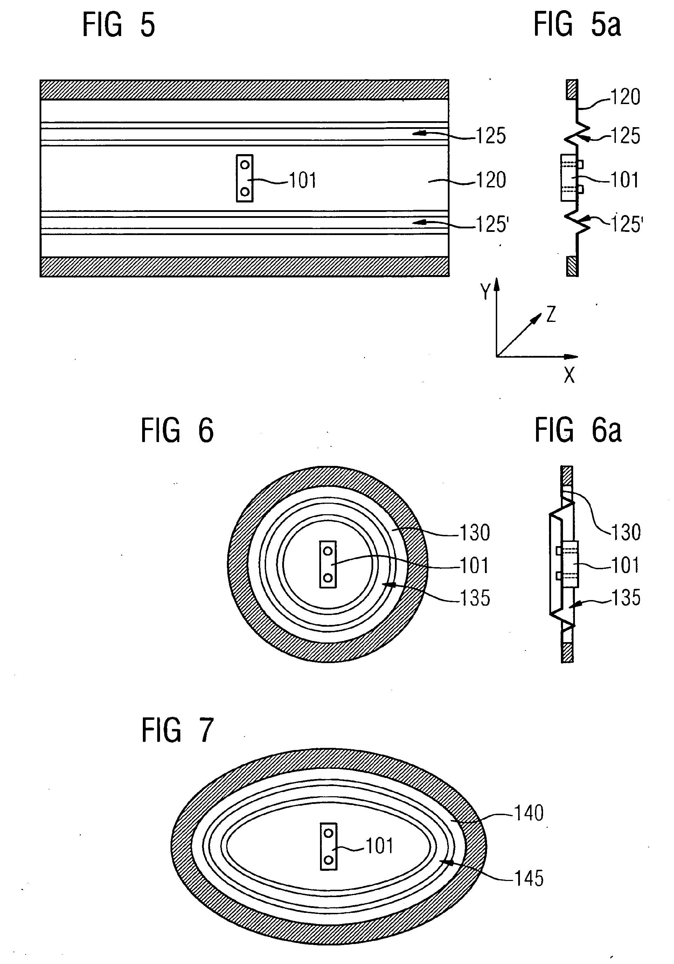

In Figur 5 ist eine neue Form einer Feder 120 dargestellt, wobei durch Sicken eine dreidimensionale Beeinflussung der Steifigkeit erreicht wird. Dazu wird bisherige Federanordnung - wie oben in Figur 1/2 gezeigt - verändert: Die Feder 110 wird um 90° gedreht, in der Mitte gespiegelt und mit ein oder mehreren Ausbuchtungen, die nachfolgend als Sicken bezeichnet werden, von frei zu wählender Form, d.h. insbesondere rund oder eckig, vorzugsweise dreieckig, versehen. Die Sicken 125 ergeben in den beiden Federn 120 eine dreidimensional geformte Anordnung.

Die Sicken 125 ermöglichen es der Federanordnung 120, ihre Länge zu ändern, ohne dass im Federmaterial dadurch starke Spannungen entstehen. Die bedeutet, die Dauerfestigkeit der Feder bleibt hoch, obwohl die Abmessung der Feder kleiner wird. Je nach Hub des Schlittens ergibt sich die geforderte Längenänderung der Feder. Dementsprechend wird die Dicke und Anzahl der Sicken 125 gewählt. Der Abstand zwischen zwei Sicken 125, 125' kann über die Länge der Sicken konstant sein oder variieren. Dadurch lässt sich die Steifigkeit über die Länge der Sicken 125 entsprechend vorgeben.

Für den Fall, dass lediglich eine Querkraft in X-Richtung, aber keine Kraft in Y-Richtung wirkt, bietet sich die "Neue Form" gemäß Figur 5 bzw. 6 an. Wenn sowohl in X- als auch in Y-Richtung Querkräfte wirken, bietet sich eine "Neue Form" Form gemäß Figur 7 an. Dabei die symmetrische Form 3 gemäß Figur 6 in X- und Y- Richtung jeweils gleich große Kräfte aufnehmen, während die Form gemäß Figur 7 ideal für ungleiche Querkräfte geeignet ist.

Die Federanordnungen gemäß den alternativen Figuren 5 bis 7 können aus beliebigem Material, beispielsweise Metall, Kunststoff, Verbundmaterialien, mit geeigneten Mitteln getränktem Papier, Fasern, etc., hergestellt werden. Die konkrete Wahl des Materials wird nach der jeweiligen Anforderung an Elastizität, Steifigkeit und Kosten getroffen.

## Patentansprüche

1. Linearantrieb, insbesondere Linearkompressor, mit einem linear verschiebbaren Schlitten (100), der von zwei Federn geführt wird, **dadurch gekennzeichnet, dass** die Federn jeweils Strukturen mit in den drei Raumrichtungen (X, Y, Z) voneinander unabhängig wählbaren Steifigkeiten aufweisen, so dass durch geeignete 3D-Ausbildungen und/oder Randkonturen der Stukturen im Verhältnis der geometrischen Abmessungen große Längenänderungen realisierbar sind, so dass die Dauerfestigkeit der Strukturen und damit der Federn gewährleistet bleibt, und dass durch die Strukturen eine versatzfreie Führung des Schlittens (100) gewährleistet ist.

2. Linearantrieb nach Anspruch 1, **dadurch gekennzeichnet, dass** bei den Strukturen eine rechteckförmige Ausbildung (120) mit vorgegebenen Randkonturen (121, 122) vorliegt.

3. Linearantrieb nach Anspruch 2, **dadurch gekennzeichnet, dass** in die Randkonturen (121, 122) Sicken (125) eingebracht sind.

4. Linearantrieb nach Anspruch 3, **dadurch gekennzeichnet, dass** die Sicken (125) eine runde Form haben.

5. Linearantrieb nach Anspruch 3, **dadurch gekennzeichnet, dass** die Sicken (125) eine eckige, vorzugsweise dreieckige, Form haben.

6. Linearantrieb nach Anspruch 1, **dadurch gekennzeichnet, dass** bei den Strukturen eine runde Ausbildung vorliegt.

7. Linearantrieb nach Anspruch 1, **dadurch gekennzeichnet, dass** bei den Strukturen eine ovale Ausbildung vorliegt.

## Claims

1. Linear drive, particularly linear compressor, with a linearly displaceable carriage (100) guided by two springs, **characterised in that** the springs have respective structures with stiffnesses selectable independently of one another in the three spatial directions (X, Y, Z) so that through suitable three-dimensional constructions and/or edge profilings of the structures large changes in length can be realised in relation to the geometric dimensions so that the permanence of the structures and thus of the springs is guaranteed and that guidance of the carriage (100) free of misalignment is ensured by the structures.

2. Linear drive according to claim 1, **characterised in that** a rectangular construction (120) with predetermined edge profilings (121, 122) is present in the case of the structures.

3. Linear drive according to claim 2, **characterised in that** corrugations (125) are formed in the edge profilings (121, 122).

4. Linear drive according to claim 3, **characterised in** the corrugations (125) have a round shape.

5. Linear drive according to claim 3, **characterised in that** the corrugations (125) have a polygonal, preferably triangular, shape.

6. Linear drive according to claim 1, **characterised in that** a round construction is present in the case of the structures.

7. Linear drive according to claim 1, **characterised in that** an oval construction is present in the case of the structures.

## Revendications

1. Entraînement linéaire, en particulier compresseur linéaire, comprenant un coulisseau (100) pouvant se déplacer dans le sens linéaire, qui est guidé par deux ressorts, **caractérisé en ce que** les ressorts présentent à chaque fois des structures avec des rigidités pouvant être sélectionnées indépendamment les unes des autres dans les trois directions de l'espace (X, Y, Z), de sorte que, par des réalisations en trois dimensions et/ou des contours de bord appropriés des structures, on peut réaliser de grandes variations de longueurs par rapport aux dimensions géométriques, de sorte que la résistance permanente des structures et donc des ressorts reste garantie, et qu'un guidage sans déport du coulisseau (100) est garanti par les structures.

2. Entraînement linéaire selon la revendication 1, **caractérisé en ce que**, en ce qui concerne les structures, on a une réalisation (120) de forme rectangulaire avec des contours de bord (121, 122) prédéfinis.

3. Entraînement linéaire selon la revendication 2, **caractérisé en ce que** des moulures (125) sont introduites dans les contours de bord (121, 122).

4. Entraînement linéaire selon la revendication 3, **caractérisé en ce que** les moulures (125) ont une forme ronde.

5. Entraînement linéaire selon la revendication 3, **caractérisé en ce que** les moulures (125) ont une forme anguleuse, de préférence triangulaire.

6. Entraînement linéaire selon la revendication 1, **caractérisé en ce que**, en qui concerne les structures, on a une réalisation ronde.

7. Entraînement linéaire selon la revendication 1, **caractérisé en ce que**, en ce qui concerne les structures, on a une réalisation ovale.
